# EUROPÄISCHE PATENTSCHRIFT

(11) **EP 2 875 082 B1**
(45) Veröffentlichungstag und Bekanntmachung des Hinweises auf die Patenterteilung: **01.06.2016**
(21) Anmeldenummer: 13737216.5
(22) Anmeldetag: 12.07.2013
(51) Int. Cl.: C09D 133/14, C09D 4/00, C09D 133/06

(54) **SCHNELLTROCKNENDE STRAHLUNGSHÄRTBARE BESCHICHTUNGSMASSEN**
FAST-DRYING, RADIATION-CURABLE COATING COMPOUNDS
MATIÈRES DE REVÊTEMENT DURCISSABLES PAR RAYONNEMENT À SÉCHAGE RAPIDE

(30) Priorität: 20.07.2012 US 201261673742 P; 20.07.2012 EP 12177220
(43) Veröffentlichungstag der Anmeldung: 27.05.2015
(73) Patentinhaber: BASF SE, 67056 Ludwigshafen am Rhein (DE)
(72) Erfinder: BECK, Erich, 68526 Ladenburg (DE); SCHWALM, Reinhold, 67157 Wachenheim (DE)
(74) Vertreter: BASF IP Association
(86) Internationale Anmeldenummer: PCT/EP2013/064751
(87) Internationale Veröffentlichungsnummer: WO 2014/012852

(56) Entgegenhaltungen:
- WO-A1-2008/075806
- US-A1- 2004 235 977

## Beschreibung

Die vorliegende Erfindung beschreibt bei niedrigerer Temperatur trocknende, niedrigviskose strahlungshärtbare Beschichtungsmassen, die Beschichtungen mit hoher Kratzfestigkeit, hoher Flexibilität und geringem Lösungsmittelbedarf ergeben, Verfahren zu deren Herstellung und deren Verwendung.

Um eine hohe Kratzfestigkeit durch strahlungshärtbare Beschichtungsmassen zu erreichen, sollte man Verbindungen mit einer hohen Funktionalität an (Meth)acrylatgruppen einsetzen. Diese sind jedoch meist recht viskos und führen häufig zu einer spröden Beschichtung. Um die Viskosität zu verringern wird meist Lösungsmittel eingesetzt, was jedoch zu einer Emission von flüchtigen organischen Bestandteilen (VOC) führt. Um darüberhinaus die Flexibilität zu erhöhen, wäre es wünschenswert Monomere einzusetzen, die eine weiche Beschichtung ergeben, beispielsweise monofunktionelle Alkyl(meth)acrylate.

Der Verwendung von Alkyl(meth)acrylaten in strahlungshärtbaren Beschichtungsmassen stand in der Vergangenheit vielfach entgegen, daß derartige Alkyl(meth)acrylate gesundheitsschädlich sind und zudem eine hohe Flüchtigkeit aufweisen, so daß bei dem Auftragen solcher Alkyl(meth)acrylate das Personal einer Exposition mit diesen Stoffen ausgesetzt ist. Jedoch sind derartige Alkyl(meth)acrylate günstige Einsatzstoffe, so daß der Einsatz aus ökonomischen Gründen wünschenswert wäre. Aus technischer Sicht spricht für die Alkyl(meth)acrylate, daß sie in der Wertschöpfungskette direkt aus (Meth)acrylsäure herstellbar sind, wohingegen höherfunktionelle (Meth)acrylate, z.B. Trimethylolpropantriacrylat, weiter hinten stehen. So wird letzteres in der Regel aus Alkyl(meth)acrylaten hergestellt, befindet sich in der Wertschöpfungskette also zwei Stufen hinter (Meth)acrylsäure.

Der Einsatz solcher Alkyl(meth)acrylate in strahlungshärtbaren Beschichtungsmassen scheitert jedoch häufig daran, daß die Alkyl(meth)acrylate in vielen strahlungshärtbaren Beschichtungsmassen nicht ausreichend verträglich sind.

WO-A-2008 075806 beschreibt keine Komponente (D) und US-A-2004 235 977 offenbart keine Kombination von Komponenten (A) bis (D).

Der vorliegenden Erfindung lag die Aufgabe zugrunde, strahlungshärtbare Beschichtungsmassen mit diedriger Viskosität zur Verfügung zu stellen, die bereits bei niedrigen Temperaturen trocknen und Beschichtungen mit gleichzeitig hoher Flexibilität und hoher Kratzfestigkeit liefern. Die Aufgabe wurde gelöst durch strahlungshärtbare Beschichtungsmassen, enthaltend
(A) mindestens ein multifunktionelles (Meth)Acrylat mit einem Molekulargewicht von nicht mehr als 1000 g/mol und einer Funktionalität von mindestens vier,
(B) mindestens einem monofunktionellen Alkyl(meth)acrylat, das als Homopolymer eine Glasübergangstemperatur von nicht mehr als 0 °C aufweist,
(C) mindestens eine Urethan(meth)acrylat, das mindestens eine freie Isocyanatgruppe und mindestens eine (Meth)acrylatgruppe aufweist,
(D) mindestens ein multifunktionelles (Meth)acrylat mit einem Molekulargewicht von mehr als 1000 g/mol und einer Funktionalität von mindestens fünf,
(E) optional mindestens ein Lösungsmittel, ausgewählt aus der Gruppe bestehend aus aus der Gruppe bestehend aus Kohlenwasserstoffen, Ketonen, Estern, alkoxylierten Alkansäurealkylestern, Ethern und deren Gemischen,
(F) optional mindestens einem Amin und/oder Alkohol,
(G) optional mindestens einem Photoinitiator und
(H) optional mindestens einem Lackhilfsmittel.

Die erfindungsgemäßen Beschichtungsmassen trocknen bei niedriger Temperatur und zeigen eine hohe Flexibilität, was beispielsweise eine gute Biegemöglichkeit oder Durchstoßbarkeit der Beschichtung zur Folge hat, sowie eine hohe Kratzfestigkeit, was sich beispielsweise an einem guten Glanzerhalt der Beschichtung zeigt.

Bei der Komponente (A) handelt es sich um mindestens ein, beispielsweise ein bis vier, bevorzugt ein bis drei, besonders bevorzugt ein bis zwei und ganz besonders bevorzugt ein multifunktionelles (Meth)Acrylat mit einem Molekulargewicht von nicht mehr als 1000 g/mol, bevorzugt nicht mehr als 800 und besonders bevorzugt nicht mehr als 600 g/mol und einer Funktionalität von mindestens vier, beispielsweise vier bis acht und bevorzugt vier bis sechs.

Bevorzugt handelt es sich bei der Komponente (A) um die (Meth)acrylate der entsprechenden multifunktionellen Alkohole, also Alkoholen mit einer Funktionalität von mindestens vier. Beispiele für derartige multifunktionelle Alkohole sind Ditrimethylolpropan, Pentaerythrit, Dipentaerythrit, Diglycerin sowie Zuckeralkohole, wie beispielsweise Sorbit, Mannit, Diglycerol, Threit, Erythrit, Adonit (Ribit), Arabit (Lyxit), Xylit, Dulcit (Galactit), Maltit oder Isomalt.

Ebenfalls als multifunktionelle Alkohole denkbar sind die ein- bis zwanzigfach und besonders bevorzugt drei- bis zehnfach ethoxylierten, propoxylierten oder gemischt ethoxylierten und propoxylierten und insbesondere ausschließlich ethoxylierten Produkte der letztgenannten Alkohole.

In einer bevorzugten Ausführungsform ist die Komponente (A) ausgewählt aus der Gruppe bestehend aus Ditrimethylolpropantetraacrylat, Pentaerythrittetraacrylat und Dipentaerythrithexaacrylat, die optional jeweils ein- bis zwanzigfach ethoxyliert, propoxyliert oder gemischt ethoxyliert und propoxyliert sein können, besonders bevorzugt handelt es sich um Pentaerythrittetraacrylat.

Bei der Komponente (B) handelt es sich um mindestens ein, beispielsweise ein bis vier, bevorzugt ein bis drei, besonders bevorzugt ein oder zwei und ganz besonders bevorzugt ein monofunktionelles Alkyl(meth)acrylat, das als Homopolymer eine Glasübergangstemperatur von nicht mehr als 0 °C aufweist.

Bevorzugt handelt es sich bei den Alkyl(meth)acrylaten (B) um (Meth)acrylsäureester von Alkanolen, die 2 bis 12 Kohlenstoffatome aufweisen.

Besonders bevorzugt weisen die Alkyl(meth)acrylate (B) einen Siedepunkt bei Normaldruck von mindestens 140 °C auf, ganz besonders bevorzugt von mindestens 200 °C. Dies bewirkt eine niedrige Flüchtigkeit der Alkyl(meth)acrylate (B).

Ganz besonders bevorzugt ist die Komponente (B) ausgewählt aus der Gruppe bestehend aus Ethylacrylat, Propylacrylat, iso-Propylacrylat, n-Butylacrylat, n-Hexylacrylat, n-Octylacrylat, 2-Ethylhexylacrylat, 3-Propylheptylacrylat, n-Decylacrylat, Laurylacrylat, n-Pentylmethacrylat, n-Octylmethacrylat, n-Decylmethacrylat und Laurylmethacrylat.

Insbesondere handelt es sich bei der Komponente (B) um n-Butyl(meth)acrylat, 2-Ethylhexylacrylat oder 3-Propylheptylacrylat.

Es ist dabei überraschend, daß trotz Einsatz von Alkyl(meth)acrylaten (B), die eine relativ niedrige Glasübergangstemperatur aufweisen, dennoch kratzfeste Beschichtungen erhalten werden können. Ferner kann durch die Verwendung der Alkyl(meth)acrylate (B) in den erfindungsgemäßen Beschichtungsmassen zur Erreichung einer niedrigen Viskosität weitgehend oder vollständig auf den Einsatz von Lösungsmitteln verzichtet werden.

Bei der Komponente (C) handelt es sich um mindestens ein, beispielsweise ein bis zwei, bevorzugtoder zwei und besonders bevorzugt ein Urethan(meth)acrylat, das mindestens eine frei Isocyanatgruppe und mindestens eine (Meth)acrylatgruppe aufweist.

Die Komponente (C) weist mindestens eine, bevorzugt mindestens zwei Isocyanatgruppen auf.

Der NCO-Gehalt (berechnet als als 42 g/mol) der Komponente (C) sollte mindestens 5 Gew% betragen, bevorzugt von 10 bis 25, besonders bevorzugt 12 bis 23 und ganz besonders bevorzugt 14 bis 16 Gew%.

Die Viskosität der Komponente (C) (gemäß DIN EN ISO 3219 (Scherrate D, 100 s⁻¹) bei 23°C) beträgt bevorzugt 200 bis 10000 mPas, besonders bevorzugt 400 bis 5000 und ganz besonders bevorzugt 1000 bis 2000 mPas.
Das mittlere Molgewicht der Komponente (C) beträgt bevorzugt von 284 bis 2000 g/mol, besonders bevorzugt 350 bis 1500 und ganz besonders bevorzugt von 400 bis 1000 g/mol.

Die Komponente (C) weist mindestens eine, bevorzugt ein bis drei, besonders bevorzugt mindestens zwei (Meth)acrylatgruppen auf.

In einer bevorzugt Ausführungsform handelt es sich bei der Komponente (C) um Verbindungen der Formel, 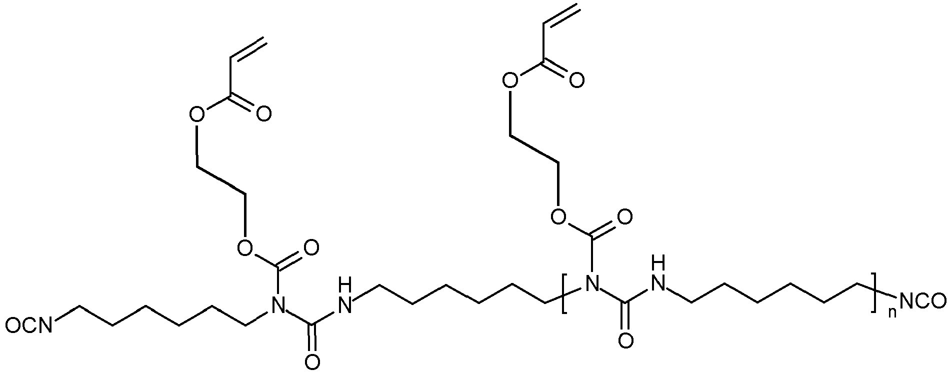 worin
n für eine positive Zahl steht, die im statistischen Mittel >1, bevorzugt mehr als 1 und bis zu 5, besonders bevorzugt mindestens 1,1 und bis zu 3 ist.

Die Verbindungen (C) sind dazu geeignet, die Verträglichkeit der Komponenten (B) und (D), die oftmals zu einer Entmischung neigen, in der erfindungsgemäßen Beschichtungsmasse zu verbessern, fungieren also als Löslichkeitsvermittler für diese Komponenten.

Des weiteren kann vermutet werden, daß innerhalb der Beschichtungsmasse die freien Isocyanatgruppen bei der Härtung an der Atmosphäre mit Feuchtigkeit, z.B. aus einer bereits auf dem Substrat befindlichen Grundierung oder aus der Luft, reagiert und in Aminogruppen umgewandelt werden, die ihrerseits wiederum mit noch vorhandenen Isocyanatgruppen reagieren können, so daß in der Beschichtungsmasse neben der Strahlungshärtung noch ein weiterer Härtungs- bzw. Nachvernetzungsmechanismus zur Verfügung steht.

In der Regel handelt es sich bei der Komponente (C) um das Reaktionsprodukt
- mindestens eines (cyclo)aliphatischen Di- oder Polyisocyanats (C1)
- mit mindestens einer Verbindung (C2) mit mindestens einer gegenüber Isocyanat reaktiven Gruppe und mindestens einer (Meth)acrylatgruppe sowie
- optional mit mindestens einer Verbindung (C3) mit mindestens zwei gegenüber Isocyanat reaktiven Gruppen.

Verbindungen (C1) sind aliphatische oder cycloaliphatische, in dieser Schrift kurz als (cyclo)-aliphatisch bezeichnet, Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione, die aus diesen zugrundeliegenden Diisocyanaten in monomerer Form durch Oligomieriserung erhalten werden können.

Der Gehalt an Isocyanatgruppen, berechnet als NCO = 42 g/mol, beträgt in der Regel von 5 bis 25 Gew%.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,6-Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethyl-hexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1 -methylcyclohexan.

Es können auch Gemische der genannten Diisocyanate vorliegen.

Bevorzugt sind Hexamethylendiisocyanat, 1,3-Bis(isocyanatomethyl)cyclohexan, Isophorondiisocyanat und Di(isocyanatocyclohexyl)methan, besonders bevorzugt ist Hexamethylendiisocyanat.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretoniminmodifizierte Polyisocyanate von aliphatischen Diisocyanaten mit insgesamt 6 bis 20 C-Atomen und/oder cycloaliphatischen Diisocyanaten mit insgesamt 6 bis 20 C-Atomen in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

### Weiterhin bevorzugt sind

1) Isocyanuratgruppen aufweisende Polyisocyanate von aliphatischen und/oder cycloaliphatischen Diisocyanaten. Besonders bevorzugt sind hierbei die entsprechenden aliphatischen oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aliphatisch und/oder cycloaliphatisch gebundenen Isocyanatgruppen, vorzugsweise aliphatisch oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 25 Gew.-% und eine mittlere NCO-Funktionalität von 3 bis 4,5 auf.
4) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemische, oder bevorzugt mit mindestens einer Verbindung (C2), bevorzugt 2-Hydroxyethyl(meth)acrylat, erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von mindestens 2, bevorzugt mindestens 2,1 und besonders bevorzugt 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar. Dabei ist jedoch gegebenenfalls der oben angeführte Gehalt an Oxadiazintriongruppen zu berücksichtigen.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Verbindungen (C2) sind solche, die mindestens eine gegenüber Isocyanat reaktive Gruppe und mindestens eine (Meth)acrylatgruppe tragen.

In einer bevorzugten Ausführungsform der Erfindung handelt es sich bei der Verbindung (C1) um eine Verbindung mit genau einer gegenüber Isocyanat reaktiven Gruppe und mindestens einer (Meth)acrylatgruppe, beispielsweise ein bis fünf, besonders bevorzugt ein vier und ganz besonders bevorzugt ein bis drei (Meth)acrylatgruppen.

Bevorzugt weisen die Komponenten (C2) ein Molgewicht unter 2000 g/mol auf, besonders bevorzugt unter 1500 g/mol, ganz besonders bevorzugt unter 1000 g/mol und insbesondere unter 750 g/mol. Spezielle Verbindungen (C2) weisen ein Molgewicht unter 500 oder sogar unter 300 g/mol auf.

Gegenüber Isocyanat reaktive Gruppen können z.B. sein -OH, -SH, -NH₂ und -NHR¹, wobei R¹ Wasserstoff oder eine 1 bis 4 Kohlenstoffatome enthaltende Alkylgruppe, wie z.B. Methyl, Ethyl, n-Propyl, *iso*-Propyl, n-Butyl, *iso*-Butyl, *sek-*Butyl oder *tert*-Butyl, bedeutet.

Komponenten (C2) können z.B. Monoester von Acrylsäure oder Methacrylsäure mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Me-thyl-amino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin verwendet werden.

Weiterhin sind auch ungesättigte Polyether- oder Polyesterole oder Polyacrylatpolyole mit einer mittleren OH-Funktionalität von 2 bis 10 geeignet, wenn auch weniger bevorzugt.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acryl-amid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono(meth)acrylat, 1,5-Pentandiolmono-(meth)acrylat, 1,6-Hexandiolmono(meth)acrylat, Glycerindi(meth)acrylat, Trimethylolpropan-di(meth)acrylat, Pentaerythrittri(meth)acrylat, 2-Aminoethyl(meth)acrylat, 2-Aminopropyl(meth)-acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopropyl(meth)acrylamid, 2-Hydroxyethyl(meth)acrylamid, 2-Hydroxypropyl(meth)-acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl(meth)acrylat sowie die Monoacrylate von Polyethylenglykol der Molmasse von 106 bis 238.

In einer bevorzugten Ausführungsform ist die Komponente (C2) ausgewählt aus der Gruppe bestehend aus 2-Hydroxyethylacrylat, 2-Hydroxyethylmethacrylat, 2- oder 3-Hydroxypropylacrylat und 1,4-Butandiolmonoacrylat, 1,2- oder 1,3-Diacrylat von Glycerin, Trimethylolpropandiacrylat, Pentaerythrittriacrylat, Ditrimethylolpropantriacrylat und Dipentaerythritpentaacrylat, bevorzugt aus 2-Hydroxyethylacrylat und 2-Hydroxyethylmethacrylat.

Verbindungen (C3) sind solche, die mindestens zwei gegenüber Isocyanat reaktive Gruppen, beispielsweise -OH, -SH, -NH₂ oder -NHR², worin R² darin unabhängig voneinander Wasserstoff, Methyl, Ethyl, *iso*-Propyl, n-Propyl, n-Butyl, *iso*-Butyl, *sek-*Butyl oder *tert*-Butyl bedeuten kann, aufweisen.

Dies sind bevorzugt 2 bis 20 Kohlenstoffatome aufweisende Diole, z.B. Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)-isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)-propan, 1,1-, 1,2-, 1,3- und 1,4-Cyclohexandimethanol, 1,2-, 1,3- oder 1,4-Cyclohexan-diol, Poly-THF mit einer Molmasse zwischen 162 und 2000, Poly-1,2-propandiol oder Poly-1,3-propan-diol mit einer Molmasse zwischen 134 und 1178 oder Polyethylenglykol mit einer Molmasse zwischen 106 und 2000 sowie aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclo-hexan-bis-(methylamin), etc., Dithiole oder mehrfunktionelle Alkohole, sekundäre oder primäre Aminoalkohole, wie Ethanolamin, Monopropanolamin etc. oder Thioalkohole, wie Thioethylenglykol.
Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, 1,1-, 1,2-, 1,3- und 1,4-Cyclohexandimethanol, Cyclooctandiol oder Norbornandiol.

Weiterhin kann es sich bei der optionalen Verbindung (C3) um mindestens eine Verbindung mit mindestens drei gegenüber Isocyanat reaktiven Gruppen handeln.

Beispielsweise können die Komponenten (C3) 3 bis 6, bevorzugt 3 bis 5, besonders bevorzugt 3 bis 4 und ganz besonders bevorzugt 3 gegenüber Isocyanat reaktiven Gruppen aufweisen. Das Molekulargewicht der Komponenten (C3) beträgt in der Regel nicht mehr als 2000 g/mol, bevorzugt nicht mehr als 1500 g/mol, besonders bevorzugt nicht mehr als 1000 g/mol und ganz besonders bevorzugt nicht mehr als 500 g/mol.

Dies sind bevorzugt 2 bis 20 Kohlenstoffatome aufweisende Polyole, beispielsweise Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, besonders bevorzugt sind Trimethylolpropan, Pentaerythrit und Glycerin und ganz besonders bevorzugt Trimethylolpropan.

Es stellt eine bevorzugte Ausführungsform der vorliegenden Erfindung dar, als Verbindung (C) das Reaktionsprodukt aus einem (cyclo)aliphatischen Diisocyanat, bevorzugt 1,6-Hexamethylendiisocyanat, mit einem Hydroxyalkyl(meth)acrylat, bevorzugt 2-Hydroxyethylacrylat, 2-Hydroxyethylmethacrylat, 2-Hydroxypropylacrylat oder 2-Hydroxypropylmethacrylat, besonders bevorzugt 2-Hydroxyethylacrylat oder 2-Hydroxypropylacrylat und ganz besonders bevorzugt 2-Hydroxyethylacrylat einzusetzen.

In einer besonders bevorzugten Ausführungsform wird dieses Reaktionsprodukt erhalten unter Reaktionsbedingungen, unter denen sowohl Urethan- als auch Allophanatgruppen gebildet werden, so daß die (Meth)acrylatgruppen zumindest teilweise über Allophanatgruppen gebunden sind. Auf diese Weise wird ein, gemessen am Molekulargewicht, besonders niedrigviskoses Produkt erhalten.

Ein Verfahren zur Herstellung solcher Produkte (C) und Produkte (C) ist beschrieben in WO 00/39183 A, dort besonders von Seite 4, Zeile 17 bis Seite 6, Zeile 6 sowie Seite 8, Zeile 44 bis Seite 10, Zeile 26 sowie dort in den Beispielen, worauf hiermit im Rahmen der vorliegenden Offenbarung ausdrücklich Bezug genommen sei.

Ein derartiges Produkt ist beispielsweise unter dem Handelsnamen Laromer® LR 9000 kommerziell von der BASF SE, Ludwigshafen, erhältlich.

Bei der Komponente (D) handelt es sich um mindestens ein, beispielsweise ein bis drei, bevorzugt ein oder zwei und besonders bevorzugt ein multifunktionelles (Meth)acrylat mit einem Molekulargewicht von mindestens 700 g/mol, bevorzugt mehr als 1000 und besonders bevorzugt 2000 g/mol und einer Funktionalität von mindestens fünf, bevorzugt fünf bis acht, besonders bevorzugt fünf bis sieben und ganz besonders bevorzugt fünf bis sechs. In der Regel beträgt das Molgewicht der Komponente (D) nicht mehr als 3000 g/mol.

Bevorzugt ist die Komponente (D) ausgewählt aus der Gruppe bestehend aus Polyester(meth)-acrylaten, Epoxy(meth)acrylaten und Urethan(meth)acrylaten, bevorzugt aus Polyester(meth)-acrylaten und Urethan(meth)acrylaten und besonders bevorzugt handelt es sich um ein Urethan(meth)acrylat.

Polyester(meth)acrylate sind (Meth)acrylate von Polyesterpolyolen mit der entsprechenden gewünschten Funktionalität.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Epoxy(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso*-Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere )CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Bevorzugte aliphatische Glycidylether sind die formalen Reaktionsprodukte von Epichlorhydrin mit Polyethylenglykol der Molmasse 62 bis 1000, Polypropylenglykol der Molmasse 76 bis 1000, Poly-THF mit einer Molmasse von 162 bis 2000, Polycaprolactondiolen der Molmasse bis zu 1000 oder Polyglycerin einer Molmasse bis zu 1000 g/mol.

Die Epoxid(meth)acrylate haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acrylgruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen.

Derartige Urethan(meth)acrylate enthalten als Aufbaukomponenten im wesentlichen:
(a) mindestens ein organisches aliphatisches, aromatisches oder cycloaliphatisches Di- oder Polyisocyanat, bevorzugt ein (cyclo)aliphatische Polyisocyanate,
(b) mindestens eine Verbindung mit mindestens einer gegenüber Isocyanat reaktiven Gruppe und mindestens einer (Meth)acrylatgruppe und
(c) gegebenenfalls mindestens eine Verbindung mit mindestens zwei gegenüber Isocyanat reaktiven Gruppen.

Die Komponenten (a), (b) und (c) können die gleichen sein, wie oben bei Komponente (C) als Komponenten (C1), (C2) und (C3) beschrieben.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

In einer bevorzugten Ausführungsform handelt es sich bei den Urethan(meth)acrylaten um solche, wie beschrieben in der WO 2006/069690 A1, dort besonders Seite 1, Zeile 35 bis Seite 10, Zeile 20 und den Beispielen.

Besonders bevorzugt handelt es sich dabei um das Umsetzungsprodukt der oben genannten Komponente (C) mit einer Verbindung mit genau einer gegenüber Isocyanat reaktiven Gruppe und mindestens zwei, bevorzugt zwei bis fünf, besonders bevorzugt zwei bis vier und ganz besonders bevorzugt zwei oder drei (Meth)acrylatgruppen. Ganz besonders bevorzugt handelt es sich bei der Verbindung (D) um das Umsetzungsprodukt von Verbindungen (C) wie beschrieben in WO 00/39183 A, dort besonders von Seite 4, Zeile 17 bis Seite 6, Zeile 6, mit einer Verbindung mit genau einer gegenüber Isocyanat reaktiven Gruppe und mindestens zwei, bevorzugt zwei bis fünf, besonders bevorzugt zwei bis vier und ganz besonders bevorzugt zwei oder drei (Meth)acrylatgruppen.

Ein derartiges Produkt ist beispielsweise unter dem Handelsnamen Laromer® UA 9050 kommerziell von der BASF SE, Ludwigshafen, erhältlich.

Insbesondere im Fall der Verwendung von Urethan(meth)acrylaten als Verbindung (D) fallen die Urethan(meth)acrylate herstellungsbedingt als Gemisch der Verbindungen (A) und (D) an, so daß diese bereits als Gemisch in die erfindungsgemäßen Beschichtungsmassen eingesetzt werden können.

Bei der optionalen Komponente (E) handelt es sich um mindestens ein Lösungsmittel, ausgewählt aus der Gruppe bestehend aus Kohlenwasserstoffen, Ketonen, Estern, alkoxylierten Alkansäurealkylestern, Ethern und deren Gemischen.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154-178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158-198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155-180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylen-glykol.

Ketone sind beispielsweise Aceton, Diethylketon, Ethylmethylketon, Isobutylmethylketon, Methylamylketon und tert.-Butylmethylketon.

Bevorzugte Lösungsmittel sind n-Butylacetat, Ethylacetat, Aceton und Methylacetat.

In einer bevorzugten Ausführungsform handelt es sich bei den Lösungsmitteln (E) um solche der oben aufgeführten Lösungsmittelklassen und Individuen, die eine Verdunstungszahl gemäß DIN 53170, 1991-08 von bis zu 20, besonders bevorzugt von bis zu 10 aufweisen.

Bei der optionalen Komponente (F) handelt es sich um mindestens ein Amin und/oder Alkohol.

Die Komponenten (F) können eine oder mehrere Amino- und/oder Hydroxygruppen aufweisen, beispielsweise ein bis drei, bevorzugt ein oder zwei und besonders bevorzugt genau eine.

Bevorzugte Verbindungen (F) sind Alkanole und/oder Aminoalkane, die ein bis 12 Kohlenstoffatome aufweisen, besonders bevorzugt C₁-C₆-Alkanole.

Beispiele für Monoalkohole sind Methanol, Ethanol, iso-Propanol, n-Propanol, n-Butanol, isoButanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol. Beispiele für Monoamine sind Methylamin, Ethylamin, *iso*-Propylamin, n-Propylamin, n-Butylamin, *iso*-Butylamin, *sek*-Butylamin, *tert*-Butyl-amin, n-Pentylamin, n-Hexylamin, n-Heptylamin, n-Octylamin, n-Decylamin, n-Dodecylamin, 2-Ethylhexylamin, Stearylamin, Cetylamin oder Laurylamin. Bevorzugte Amine sind Benzylamin und Methoxypropylamin.

Bei der optionalen Komponente (G) handelt es sich um mindestens einen Photoinitiator, bevorzugt ein bis drei und besonders bevorzugt um einein Photoinitiator oder Gemische aus zwei Photoinitiatoren.

Als Photoinitiatoren können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SI-TA Technology Ltd, London, genannten.

In Betracht kommen beispielsweise Phosphinoxide, Benzophenone, α-Hydroxy-alkyl-arylketone, Thioxanthone, Anthrachinone, Acetophenone, Benzoine und Benzoinether, Ketale, Imidazole oder Phenylglyoxylsäuren

In Betracht kommen solche Photoinitiatoren, wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei.

Beispielhaft genannt seien für die einzelnen Klassen folgende Verbindungen:
Mono- oder Bisacylphosphinoxide, wie z.B. Irgacure® 819 (Bis(2,4,6-Trimethylbenzoyl)phenyl-phosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO), Ethyl-2,4,6-trimethylbenzoylphenylphosphinat, Bis(2,6-dimethoxybenzoyl)-2,4,4-trimethylpentylphosphinoxid,
Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzo-phenon oder 4-Butoxybenzophenon,
1-Benzoylcyclohexan-1-ol (1-Hydroxy-cyclohexyl-phenylketon), 2-Hydroxy-2,2-dimethylaceto-phenon (2-Hydroxy-2-methyl-1-phenyl-propan-1-on), 1-Hydroxyacetophenon, 1-[4-(2-Hydroxy-ethoxy)-phenyl]-2-hydroxy-2-methyl-1-propan-1-on, Polymeres, das 2-Hydroxy-2-methyl-1-(4-isopropen-2-yl-phenyl)-propan-1-on einpolymerisiert enthält (Esacure® KIP 150),
10-Thioxanthenon, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Chloroxanthenon, β-Methylanthrachinon, tert-Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-tert-Butylanthrachinon, 1-Chloranthrachinon, 2-Amylanthrachinon,
Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-lndanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on, 2-Benzyl-2-dimethylamino-1-)4-morpholinophenyyl)-butan-1-on,
4-Morpholinodeoxybenzoin, Benzoin, Benzoin-iso-butylether, Benzoin-tetrahydropyranylether, Benzoin-methylether, Benzoin-ethylether, Benzoin-butylether, Benzoin-iso-propylether, 7-H-Benzoin-methylether,
Acetophenondimethylketal, 2,2-Diethoxyacetophenon, Benzilketale, wie Benzildimethylketal,
Phenylglyoxalsäuren wie in DE-A 198 26 712, DE-A 199 13 353 oder WO 98/33761 beschrieben, beispielsweise Phenylglyoxalsäuremono- und -diester von Polyethylenglykolen der Molmasse 62 bis 500 g/mol.

### Benzaldehyd, Methylethylketon, 1-Naphthaldehyd, Triphenylphosphin, Tri-o-Tolylphosphin, 2,3-Butandion

Als Gemisch zu nennen sind insbesondere 2-Hydroxy-2-Methyl-1-phenyl-propan-2-on und 1-Hydroxy-cyclohexyl-phenylketon,
Bis(2,6-dimethoxybenzoyl)-2,4,4-trimethylpentylphosphinoxid und 2-Hydroxy-2-methyl-1-phenyl-propan-1-on
Benzophenon und 1-Hydroxy-cyclohexyl-phenylketon,
Bis(2,6-dimethoxybenzoyl)-2,4,4-trimethylpentylphosphinoxid und 1-Hydroxy-cyclohexyl-phenylketon,
2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon,
2,4,6-Trimethylbenzophenon und 4-Methylbenzophenon und 2,4,6-Trimethylbenzoyldiphenylphosphinoxid,
Denkbar als Photoinitiatoren sind ebenfalls polymere Photoinitiatoren, wie beispielsweise der Diester von Carboxymethoxybenzophenon mit Polytetramethylenglykolen unterschiedlichen Molgewichts, bevorzugt 200 bis 250 g/mol (CAS 515136-48-8), sowie CAS 1246194-73-9, CAS 813452-37-8, CAS 71512-90-8, CAS 886463-10-1 oder weitere polymere Benzophenonderivate, wie sie beispielsweise unter dem Handelsnamen Omnipol® BP der Firma IGM Resins B.V., Waalwijk, Niederlande oder Genopol® BP1 der Firma Rahn AG, Schweiz im Handel verfügbar sind. Denkbar sind ferner auch polymere Thioxanthone, beispielsweise der Diester von Carboxymethoxythioxanthonen mit Polytetramethylenglykolen unterschiedlichen Molgewichts, wie sie beispielsweise unter dem Handelsnamen Omnipol® TX der Firma IGM Resins B.V., Waalwijk, Niederlande im Handel verfügbar sind. Denkbar sind ferner auch polymere α-Aminoketone, beispielsweise der Diester von Carboxyethoxythioxanthonen mit Polyethylenglykolen unterschiedlichen Molgewichts, wie sie beispielsweise unter dem Handelsnamen Omnipol® 910 oder Omnipol® 9210 der Firma IGM Resins B.V., Waalwijk, Niederlande im Handel verfügbar sind.

In einer bevorzugten Ausführungsform werden als Photoinitiatoren Silsesquioxanverbindungen mit mindestens einer initiierend wirkenden Gruppe eingesetzt, wie sie beschrieben sind in WO 2010/063612 A1, dort besonders von Seite 2, Zeile 21 bis Seite 43, Zeile 9, was hiermit per Bezugnahme Bestandteil der vorliegenden Offenbarung sei, bevorzugt von Seite 2, Zeile 21 bis Seite 30, Zeile 5 sowie den in den Beispiele der WO 2010/063612 A1 beschriebenen Verbindungen.

Als (H) optionale Lackhilfsmittel und Additive zu nennen sind beispielsweise Antioxidantien, Stabilisatoren, Aktivatoren (Beschleuniger), Füllmittel, Pigmente, Farbstoffe, Trockenstoffe, antistatische Agentien, Flammschutzmittel, Verdicker, Rheologiehilfsmittel, thixotrope Agentien, oberflächenaktive Agentien, Viskositätsmodifikatoren, Plastifizierer oder Chelatbildner.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80 °C von mehr als 100 Stunden aufweisen, wie Di-t-Butylperoxid, Cumolhydroperoxid, Dicumylperoxid, t-Butylperbenzoat, silylierte Pinakole, die z. B. unter dem Handels-namen ADDID 600 der Firma Wacker kommerziell erhältlich sind oder Hydroxylgruppen-haltige Amin-N-Oxide, wie 2,2,6,6-Tetramethylpiperidin-N-oxyl und 4-Hydroxy-2,2,6,6-Tetramethylpiperidin-N-oxyl.

Weitere Beispiele geeigneter Initiatoren sind in "Polymer Handbook", 2. Aufl., Wiley & Sons, New York beschrieben.

Als Rheologiehilfsmittel kommen neben radikalisch (co)polymerisierten (Co)Polymerisaten, übliche organische und anorganische Verdicker wie Hydroxymethylcellulose, polymere Harnstoffe oder Bentonit in Betracht.

Bei den Trockenstoffen kann es sich beispielsweise um monofunktionelle Isocyanate, beispielsweise Phenylisocyanat, oder Orthoester, beispielsweise ortho Ameisensäuremethylester oder ortho Ameisensäureethylester, handeln.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesium-silikate und Calciumcarbonate.

Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die erfindungsgemäßen Beschichtungsmassen sind bevorzugt wie folgt zusammengesetzt:
(A) 2 bis 50 Gew%, bevorzugt 15 bis 40 Gew%
(B) 5 bis 90 Gew%, bevorzugt 30 bis 60 Gew%
(C) 2 bis 50 Gew%, bevorzugt 15 bis 40 Gew%, besonders bevorzugt 20 bis 35 Gew%
(D) 1 bis 40 Gew%, bevorzugt 15 bis 40 Gew%
(E) 0 bis 50 Gew%, bevorzugt 5 bis 30 Gew%
(F) 0 bis 10 Gew%, bevorzugt 0 bis 4 Gew%
(G) 0 bis 8 Gew%, bevorzugt 0 bis 5 Gew%
(H) 0 bis 15 Gew%, bevorzugt 0 bis 10 Gew%
mit der Maßgabe, daß die Summe immer 100 Gew% beträgt.

Die erfindungsgemäßen Beschichtungsmassen können in einer bevorzugten Ausführungsform hergestellt werden, indem man die Komponenten (A), (C) und (D) vorlegt, was in der Regel zu einem zweiphasigen Gemisch führt, und diesem zweiphasigen Gemisch Komponente (B) unter Vermischen solange zudosiert, bis ein einphasiges Gemisch erhalten wird. Die angestrebte Zielviskosität wird erreicht durch Zudosieren von weiterem (B) sowie gegebenenfalls Lösungsmittel (E).

Die erfindungsgemäßen Beschichtungsmassen können in einer weiteren bevorzugten Ausführungsform hergestellt werden, indem man die Komponenten (A), (B) und (D) vorlegt und diesem Gemisch Komponente (C) solange zudosiert, bis ein zweiphasiges Gemisch erhalten wird. Ein einphasiges Gemisch sowie die angestrebte Zielviskosität wird dann wieder erreicht durch Zudosieren von weiterem (B) sowie gegebenenfalls Lösungsmittel (E).

Die erfindungsgemäßen Polyurethane können verwendet werden zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle und beschichtete Metalle.

Bei einer Verwendung in Beschichtungsmitteln können die erfindungsgemäßen Polyurethane insbesondere in Grundierungen, Füllern, pigmentierten Decklacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1000 g/m² und vorzugsweise 10 bis 200 g/m².

Des weiteren wird ein Verfahren zum Beschichten von Substraten offenbart, bei dem man das Aufbringen der erfindungsgemäßen Beschichtungsmasse auf das Substrat unter einem Inertgas durchführt. Als Inertgase eignen sich vorzugsweise Stickstoff, Edelgase, Kohlendioxid, oder Verbrennungsgase. Dies ist insbesondere dann bevorzugt, wenn sich beim Auftragen unter einer sauerstoffhaltigen Atmosphäre explosionsfähige Dämpfe bilden würden.

Dieses Beschichtungsverfahren unter Inertgas wird besonders bevorzugt verbunden mit einer UV-Härtung der aufgebrachten und getrockneten Beschichtungsmasse ebenfalls unter Inertbedingungen. Dies hat den besonderen Vorteil, daß überschüssige Beschichtungsmasse, z.B. sogenannter Overspray, und/oder die in der Atmosphäre befindlichen Bestandteile der Beschichtungsmasse, beispielsweise Lösungsmittel (E) und/oder Komponente (B), einfach wiedergewonnen werden können.

Dadurch, daß Auftragung und optional Trocknung und Härtung unter einem Inertgas erfolgen, was üblicherweise mit einer Kammerung der Anlage verbunden ist, ist es auch problemlos möglich die Alkyl(meth)acrylate (B) in der erfindungsgemäßen Beschichtungsmasse zu verwenden, da etwaige Emissionen dieser Verbindungen so begrenzt bleiben.

Weiterhin wird ein Verfahren zum Beschichten von Substraten offenbart, bei dem man das eine erfindungsgemäßen Beschichtungsmasse oder eine solche enthaltende Lackformulierung, gegebenenfalls mit weiteren lacktypischen Additiven und thermisch, chemisch oder starhlungshärtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung, dies ist jedoch weniger bevorzugt.

Die Beschichtungsmittel können nach den unterschiedlichsten Spritzverfahren, wie z.B. Gasdruck-, Airless-, Airmix- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden. Gasdruckbetriebene Verfahren können dabei mit Hilfe von Luft oder auch Inertgas durchgeführt werden.

Die Beschichtungsstärke liegt in der Regel in einem Bereich von etwa 3 bis 1000 g/m² und vorzugsweise 5 bis 200, bevorzugt 10 bis 100 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Insbesondere bei Einsatz mindestens eines Lösungsmittels stellt es einen besonderen Vorteil der erfindungsgemäßen Beschichtungsmassen dar, daß sie bei einer Temperatur von 20 bis 100 °C innerhalb von nicht mehr als 60, bevorzugt nicht mehr als 30, besonders bevorzugt nicht mehr als 15, ganz besonders bevorzugt nicht mehr als 10 und insbesondere nicht mehr als 5 Minuten getrocknet werden können. Kriterium für Trocknung ist dabei das Erhalten einer blasenfreien Beschichtung nach Härtung.

Weiterhin wird ein Verfahren zum Beschichten von Substraten offenbart, bei dem man die erfindungsgemäße Beschichtungsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160 °C, bevorzugt zwischen 60 und 160 °C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Soweit auch Vernetzer enthalten sind, die eine zusätzliche thermische Vernetzung bewirken, z.B. Isocyanate, kann z.B. gleichzeitig oder auch nach der Strahlungshärtung die thermische Vernetzung durch Temperaturerhöhung auf bis zu 150 °C, vorzugsweise bis zu 130 °C durchgeführt werden.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

### Beispiel 1 (Vergleich)

67 Teile eines hochfunktionellen aliphatischen Urethanacrylates (Laromer® UA 9050, 80% ig in n-Butylacetat von BASF SE, entspricht der erfindungsgemäßen Komponente (A)) wurden gemischt mit 33 Teilen 2-Ethylhexylacrylat, sowie 0,2 Teilen EFKA® 2010 (Entschäumer, BASF SE), 0,3 Teile EFKA® 3299 (Verlaufshilfsmittel, BASF SE, Ludwigshafen), 0,5 Teile Tinuvin® 292 ((HALS Radikalfänger, BASF SE), 0,7 Teile Tinuvin® 405 (UV Absorber, BASF SE, Ludwigshafen), 1,3 Teile Irgacure® 754 (Photoinitiator, BASF SE), 0,3 Teile Lucirin® TPO (Photoinitiator, BASF SE) und 30 Minuten intensiv unter Lichtschutz zur Vermeidung der Photopolymerisation gerührt. Die Viskosität wurde mit zusätzlichem n-Butylacetat auf 50 mPas (Kegel/Platte System, Scherrate 40000 1/s, bei 23°C) eingestellt.

Dieser Lack 1 wurde über pneumatisches Spritzen auf ein mit einem Hydrobasislack (Filmdicke 13 µm, Coatiq(TM) Wörwag Premium Basecoat (WB), Fa. Karl Wörwag Lack- und Farbenfabrik GmbH & Co. KG) beschichtetes Kunstsoffsubstrat (PC/PBT Xenoy® CL101, GE Plastics, 100x150x3 mm) appliziert (Filmdicke Klarlack 35 µm).

Nach 5 Minuten Ablüften bei Raumtemperatur wurde der Lackfilm mit einer 2KW Quecksilbermitteldrucklampe (UVASPOT® 2000, Fa. Dr. Hönle AG) unter Kohlendioxidatmosphäre (Restsauerstoffgehalt 1Vol.-%) im Abstand von 60 cm über 80 Sekunden bestrahlt und gehärtet. Nach 3 Tagen Lagerung bei 60°C bei 100% relativer Luftfeuchte wurden die Lackprüfungen durchgeführt.

Die beschichtete Platte wurde zur Prüfung der Flexibilität mit der unbeschichteten Rückseite aufliegend über ein Rohr mit 9 cm Durchmesser gebogen. Dabei zeigte sich eine starke Rißbildung im Lackfilm.

Zur Prüfung der Chemikalienbeständigkeit wurde die Lackierung mit jeweils 1 Tropfen 1 %ige Schwefelsäure, 1% ige Natronlauge und 50%ige wässrige Pankreatinlösung (Fa. Merck Art.7130) über 30 Minuten mit Glasschälchen gegen Verdunstung abgedeckt bei 55°C belegt, danach abgewaschen und beurteilt. Die Oberfläche blieb ohne sichtbare Veränderungen.

Die Kratzfestigkeit wurde durch Scheuern mit einem Scheuervlies (Scotch Brite® 7448 Typ S Ultra Fine, 3M) unter einem Hammer mit 500g Gewicht bei 5 cm² Auflagefläche nach 50 Doppelhüben über die relative Glanzdifferenz (Meßwinkel 20°, micro-TRI-gloss® µ (BYK-Gardner GmbH) zu 65% relativem Restglanz ermittelt.

### Beispiele 2-10:

### Mischreihe zur Erhöhung der Flexibilität

Das aliphatische Urethanacrylat (Laromer® UA 9050) wurde mit steigenden Mengen 2-Ethylhexylacrylat unter Zusatz eines aliphatischen Urethanacrylates mit je zwei Acrylat- und je zwei Isocyanatgruppen (Laromer® LR 9000, BASF SE Ludwigshafen als erfindungsgemäße Komponente (C)) zur Beurteilung der Verträglichkeitsgrenzen abgemischt (Angaben in Gewichtsteilen):

| | 2 (Vgl.) | 3 (Vgl.) | 4 | 5 | 6 | 7 | 8 | 9 | 10 |
|---|---|---|---|---|---|---|---|---|---|
| Laromer® UA 9050 | 69 | 67 | 63 | 59 | 52 | 50 | 42 | 41 | 33 |
| Laromer® LR 9000 | 0 | 0 | 3 | 3 | 13 | 13 | 18 | 18 | 26 |
| Ethylhexylacrylat | 31 | 33 | 33 | 38 | 35 | 38 | 39 | 41 | 41 |
| Aussehen | klar | trüb | klar | trüb | klar | trüb | klar | trüb | klar |

Man sieht, daß durch Zumischen von Laromer® LR 9000 als Komponente (C) der Anteil an 2-Ethylhexylacrylat in der Mischung erhöht werden kann.

### Beispiel 11:

Entsprechend Beispiel 1 wurden zu 100 Teilen der Mischung aus Beispiel 10 0,2 Teile EFKA ®2010 (BASF SE), 0,3 Teile EFKA® 3299, 0,5 Teile Tinuvin® 292 (BASF SE), 0,7 Teile Tinuvin® 405, 1,3 Teile Irgacure® 754 (BASF SE) und 0,3 Teile Lucirin® TPO (BASF SE) gemischt und entsprechend die Lackeigenschaften geprüft.
Die Chemikalienbeständigkeit und Kratzfestigkeit (relativer Restglanz 64%) waren vergleichbar zu Beispiel 1, jedoch ergab sich in der Flexibilitätsprüfung keine Rißbildung.

Man sieht, daß man durch die Erhöhung des Anteils an Ethylhexylacrylat einen Lack mit einer höheren Flexibilität erhält, die Verträglichkeit mit dem aliphatischen Urethanacrylat (Komponente (A)) wird durch Zumischung der Komponente (C) gewährleistet. Dadurch ist es möglich, einen klaren Lack zu formulieren, der alle Eigenschaften des Lacks aus Vergleichsbeispiel 1 aufweist und zusätzlich eine erhöhte Flexibilität aufweist.

## Patentansprüche

1. Strahlungshärtbare Beschichtungsmassen, enthaltend
(A) mindestens ein multifunktionelles (Meth)Acrylat mit einem Molekulargewicht von nicht mehr als 1000 g/mol und einer Funktionalität von mindestens vier,
(B) mindestens einem monofunktionellen Alkyl(meth)acrylat, das als Homopolymer eine Glasübergangstemperatur von nicht mehr als 0 °C aufweist,
(C) mindestens eine Urethan(meth)acrylat, das mindestens eine freie Isocyanatgruppe und mindestens eine (Meth)acrylatgruppe aufweist,
(D) mindestens ein multifunktionelles (Meth)acrylat mit einem Molekulargewicht von mehr als 1000 g/mol und einer Funktionalität von mindestens fünf,
(E) optional mindestens ein Lösungsmittel, ausgewählt aus der Gruppe bestehend aus Kohlenwasserstoffen, Ketonen, Estern, alkoxylierten Alkansäurealkylestern, Ethern und deren Gemischen,
(F) optional mindestens einem Amin und/oder Alkohol,
(G) optional mindestens einem Photoinitiator und
(H) optional mindestens einem Lackhilfsmittel,

2. Beschichtungsmasse gemäß Anspruch 1, **dadurch gekennzeichnet, dass** Komponente (A) ausgewählt ist aus der Gruppe bestehend aus Ditrimethylolpropantetraacrylat, Pentaerythrittetraacrylat und Dipentaerythrithexaacrylat.

3. Beschichtungsmasse gemäß einem der vorstehenden Ansprüche, **dadurch gekennzeichnet, dass** es sich bei den Alkyl(meth)acrylaten (B) um (Meth)acrylsäureester von Alkanolen handelt, die 2 bis 12 Kohlenstoffatome aufweisen,

4. Beschichtungsmasse gemäß einem der vorstehenden Ansprüche, **dadurch gekennzeichnet, daß** Komponente (B) ausgewählt aus der Gruppe bestehend aus Ethylacrylat, Propylacrylat, iso-Propylacrylat, n-Butylacrylat, n-Hexylacrylat, n-Octylacrylat, 2-Ethylhexylacrylat, 3-Propylheptylacrylat, n-Decylacrylat, Laurylacrylat, n-Pentyl-methacrylat, n-Octylmethacrylat, n-Decylmethacrylat und Laurylmethacrylat.

5. Beschichtungsmasse gemäß einem der vorstehenden Ansprüche, **dadurch gekennzeichnet, dass** es sich bei der Komponente (C) um das Reaktionsprodukt
- mindestens eines (cyclo)aliphatischen Di- oder Polyisocyanats (C1)
- mit mindestens einer Verbindung (C2) mit mindestens einer gegenüber Isocyanat reaktiven Gruppe und mindestens einer (Meth)acrylatgruppe sowie
- optional mit mindestens einer Verbindung (C3) mit mindestens zwei gegenüber Isocyanat reaktiven Gruppen handelt.

6. Beschichtungsmasse gemäß einem der Ansprüche 1 bis 4, **dadurch gekennzeichnet, dass** es sich bei der Komponente (C) um ein Reaktionsprodukt aus einem (cyclo)aliphatischen Diisocyanat mit einem Hydroxyalkyl(meth)acrylat handelt, das erhalten wurde unter Reaktionsbedingungen, unter denen sowohl Urethan- als auch Allophanatgruppen gebildet werden, so dass die (Meth)acrylatgruppen zumindest teilweise über Allophanatgruppen gebunden sind.

7. Beschichtungsmasse gemäß einem der vorstehenden Ansprüche, **dadurch gekennzeichnet, dass** Komponente (D) ausgewählt aus der Gruppe bestehend aus Polyester(meth)acrylaten, Epoxy(meth)acrylaten und Urethan(meth)acrylaten.

8. Beschichtungsmasse gemäß einem der Ansprüche 1 bis 6, **dadurch gekennzeichnet, dass** es sich bei der Komponente (D) um ein Urethan(meth)acrylat handelt mit einem Gehalt von 1 bis 5, Mol (Meth)acrylgruppen pro 1000 g Urethan(meth)acrylat.

9. Beschichtungsmasse gemäß einem der vorstehenden Ansprüche, **dadurch gekennzeichnet, dass** Komponente (E) ausgewählt aus der Gruppe bestehend aus n-Butylacetat, Ethylacetat, Aceton und Methylacetat

10. Verfahren zur Herstellung von Beschichtungsmassen gemäß einem der vorstehenden Ansprüche, **dadurch gekennzeichnet, dass** man die Komponenten (A), (C) und (D) vorlegt und Komponente (B) unter Vermischen solange zudosiert, bis ein einphasiges Gemisch erhalten wird.

11. Verfahren zur Herstellung von Beschichtungsmassen gemäß einem der Ansprüche 1 bis 9, **dadurch gekennzeichnet, dass** man die Komponenten (A), (B) und (D) vorlegt und Komponente (C) unter Vermischen solange zudosiert, bis ein zweiphasiges Gemisch erhalten wird, gefolgt von Zudosieren von weiterem (B) sowie gegebenenfalls Lösungsmittel (E).

12. Verfahren zum Beschichten von Substraten, **dadurch gekennzeichnet, dass** man das Aufbringen einer Beschichtungsmasse gemäß einem der Ansprüche 1 bis 9 auf das Substrat unter einem Inertgas durchführt, anschließend trocknet und unter Inertbedingungen mit UV-Strahlung härtet.

13. Verwendung von Beschichtungsmassen gemäß einem der Ansprüche 1 bis 9 zur Beschichtung von Holz, Holzfurnier, Papier, Pappe, Karton, Textil, Leder, Vlies, Kunststoffoberflächen, Glas, Keramik, mineralische Baustoffe, Metalle und beschichteten Metallen.

## Claims

1. A radiation-curable coating composition comprising
(A) at least one polyfunctional (meth)acrylate having a molecular weight of not more than 1000 g/mol and a functionality of at least four,
(B) at least one monofuctional alkyl (meth)acrylate which as a homopolymer has a glass transition temperature of not more than 0°C,
(C) at least one urethane (meth)acrylate which has at least one free isocyanate group and at least one (meth)acrylate group,
(D) at least one polyfunctional (meth)acrylate having a molecular weight of more than 1000 g/mol and a functionality of at least five,
(E) optionally at least one solvent selected from the group consisting of hydrocarbons, ketones, esters, alkoxylated alkanoic acid alkyl esters, ethers, and mixtures thereof,
(F) optionally at least one amine and/or alcohol,
(G) optionally at least one photoinitiator, and
(H) optionally at least one paint auxiliary.

2. The coating composition according to claim 1, wherein component (A) is selected from the group consisting of ditrimethylolpropane tetraacrylate, pentaerythritol tetraacrylate, and dipentaerythritol hexaacrylate.

3. The coating composition according to either of the preceding claims, wherein the alkyl (meth)acrylates (B) are (meth)acrylic esters of alkanols which have 2 to 12 carbon atoms.

4. The coating composition according to any of the preceding claims, wherein component (B) is selected from the group consisting of ethyl acrylate, propyl acrylate, isopropyl acrylate, n-butyl acrylate, n-hexyl acrylate, n-octyl acrylate, 2-ethylhexyl acrylate, 3-propylheptyl acrylate, n-decyl acrylate, lauryl acrylate, n-pentyl methacrylate, n-octyl methacrylate, n-decyl methacrylate, and lauryl methacrylate.

5. The coating composition according to any of the preceding claims, wherein component (C) is the reaction product
- of at least one (cyclo)aliphatic diisocyanate or polyisocyanate (C1)
- with at least one compound (C2) having at least one isocyanate-reactive group and at least one (meth)acrylate group and also
- optionally with at least one compound (C3) having at least two isocyanate-reactive groups.

6. The coating composition according to any of claims 1 to 4, wherein component (C) is a reaction product of a (cyclo)aliphatic diisocyanate with a hydroxyalkyl (meth)acrylate which has been obtained under reaction conditions under which both urethane groups and allophanate groups are formed, and so the (meth)acrylate groups are bonded at least partly via allophanate groups.

7. The coating composition according to any of the preceding claims, wherein component (D) is selected from the group consisting of polyester (meth)acrylates, epoxy (meth)acrylates, and urethane (meth)acrylates.

8. The coating composition according to any of claims 1 to 6, wherein component (D) is a urethane (meth)acrylate having a (meth)acrylic group content of 1 to 5 mol per 1000 g of urethane (meth)acrylate.

9. The coating composition according to any of the preceding claims, wherein component (E) is selected from the group consisting of n-butyl acetate, ethyl acetate, acetone, and methyl acetate.

10. A process for producing a coating composition according to any of the preceding claims, wherein components (A), (C), and (D) are introduced as an initial charge and component (B) is metered in with mixing until a single-phase mixture is obtained.

11. A process for producing a coating composition according to any of claims 1 to 9, wherein components (A), (B), and (D) are introduced as an initial charge and component (C) is metered in with mixing until a two-phase mixture is obtained, followed by metered addition of further (B) and also, optionally, solvent (E).

12. A process for coating a substrate, wherein a coating composition according to any of claims 1 to 9 is applied to the substrate under an inert gas, then dried and cured under inert conditions with UV radiation.

13. The use of a coating composition according to any of claims 1 to 9 to coat wood, wood veneer, paper, paperboard, cardboard, textile, leather, nonwoven, plastics surfaces, glass, ceramic, mineral building materials, and coated or uncoated metals.

## Revendications

1. Masses de revêtement durcissables sous l'effet d'un rayonnement, contenant
(A) au moins un (méth)acrylate multifonctionnel présentant un poids moléculaire qui n'est pas supérieur à 1000 g/mole et une fonctionnalité d'au moins quatre,
(B) au moins un (méth)acrylate d'alkyle monofonctionnel, qui, en tant qu'homopolymère, présente une température de transition vitreuse qui n'est pas supérieure à 0°C,
(C) au moins un (méth)acrylate d'uréthane, qui présente au moins un groupe isocyanate libre et au moins un groupe (méth)acrylate,
(D) au moins un (méth)acrylate multifonctionnel présentant un poids moléculaire supérieur à 1000 g/mole et une fonctionnalité d'au moins cinq,
(E) éventuellement au moins un solvant, choisi dans le groupe constitué par les hydrocarbures, les cétones, les esters, les esters alkyliques alcoxylés d'acides alcanoïques, les éthers et leurs mélanges,
(F) éventuellement au moins une amine et/ou un alcool,
(G) éventuellement d'au moins un photo-initiateur et
(H) éventuellement au moins un adjuvant de laque.

2. Masse de revêtement selon la revendication 1, **caractérisée en ce que** le composant (A) est choisi dans le groupe constitué par le tétraacrylate de ditriméthylolpropane, le tétraacrylate de pentaérythritol et l'hexaacrylate de dipentaérythritol.

3. Masse de revêtement selon l'une quelconque des revendications précédentes, **caractérisée en ce qu'**il s'agit, pour les (méth)acrylates d'alkyle (B), d'esters de l'acide (méth)acrylique d'alcanols qui présentent 2 à 12 atomes de carbone.

4. Masse de revêtement selon l'une quelconque des revendications précédentes, **caractérisée en ce que** le composant (B) est choisi dans le groupe constitué par l'acrylate d'éthyle, l'acrylate de propyle, l'acrylate d'iso-propyle, l'acrylate de n-butyle, l'acrylate de n-hexyle, l'acrylate de n-octyle, l'acrylate de 2-éthylhexyle, l'acrylate de 3-propylheptyle, l'acrylate de n-décyle, l'acrylate de lauryle, le méthacrylate de n-pentyle, le méthacrylate de n-octyle, le méthacrylate de n-décyle et le méthacrylate de lauryle.

5. Masse de revêtement selon l'une quelconque des revendications précédentes, **caractérisée en ce qu'**il s'agit, pour le composant (C), du produit de réaction
- d'au moins un diisocyanate ou polyisocyanate (cyclo)aliphatique (C1),
- avec au moins un composé (C2) présentant au moins un groupe réactif par rapport à isocyanate et au moins un groupe (méth)acrylate,
- éventuellement avec au moins un composé (C3) présentant au moins deux groupes réactifs par rapport à isocyanate.

6. Masse de revêtement selon l'une quelconque des revendications 1 à 4, **caractérisée en ce qu'**il s'agit, pour le composant (C), d'un produit de réaction d'un diisocyanate (cyclo)aliphatique avec un (méth)acrylate d'hydroxyalkyle, qui a été obtenu dans des conditions de réaction dans lesquelles des groupes tant d'uréthane que d'allophanate sont formés de telle sorte que les groupes (méth)acrylate sont au moins partiellement liés via des groupes allophanate.

7. Masse de revêtement selon l'une quelconque des revendications précédentes, **caractérisée en ce que** le composant (D) est choisi dans le groupe constitué par les (méth)acrylates de polyester, les époxy(méth)acrylates et les (méth)acrylates d'uréthane.

8. Masse de revêtement selon l'une quelconque des revendications 1 à 6, **caractérisée en ce qu'**il s'agit, pour le composant (D), d'un (méth)acrylate d'uréthane présentant une teneur de 1 à 5 moles de groupes (méth)acryle par 1000 g de (méth)acrylate d'uréthane.

9. Masse de revêtement selon l'une quelconque des revendications précédentes, **caractérisée en ce que** le composant (E) est choisi dans le groupe constitué par l'acétate de n-butyle, l'acétate d'éthyle, l'acétone et l'acétate de méthyle.

10. Procédé pour la préparation de masses de revêtement selon l'une quelconque des revendications précédentes, **caractérisé en ce qu'**on dispose au préalable les composants (A), (C) et (D) et on dose le composant (B) tout en mélangeant jusqu'à ce qu'on obtienne un mélange à une phase.

11. Procédé pour la préparation de masses de revêtement selon l'une quelconque des revendications 1 à 9, **caractérisé en ce qu'**on dispose au préalable les composants (A), (B) et (D) et on dose le composant (C) tout en mélangeant jusqu'à ce qu'on obtienne un mélange à deux phases, puis on dose du composant (B) supplémentaire ainsi que le cas échéant du solvant (E).

12. Procédé pour le revêtement de substrats, **caractérisé en ce qu'**on réalise l'application d'une masse de revêtement selon l'une quelconque des revendications 1 à 9 sur le substrat sous un gaz inerte, on sèche ensuite et on durcit dans des conditions inertes par un rayonnement UV.

13. Utilisation des masses de revêtement selon l'une quelconque des revendications 1 à 9 pour le revêtement de bois, de placage en bois, de papier, de carton-pâte, de carton, de textile, de cuir, de non-tissé, de surfaces en matériau synthétique, de verre, de céramique, de matériaux de construction minéraux, de métaux et de métaux revêtus.
